# EUROPEAN PATENT APPLICATION

(11) **EP 2 910 426 A1**
(43) Date of publication of application: **26.08.2015**
(21) Application number: 13835137.4
(22) Date of filing: 23.08.2013
(51) Int. Cl.: B60R 1/06, E06B 7/12

(54) **TECHNICAL ARRANGEMENT FOR AIR SYSTEMS INTENDED FOR WING MIRRORS AND WINDOWS**

(30) Priority: 06.09.2012 BR 202012225366 U
(71) Applicant: Bonsaver, Joseli Eliana, 13318-000 Cabreuva - SP (BR); De Oliveira, Marcelo, 13216-680 Jundiai - SP (BR)
(72) Inventor: Bonsaver, Joseli Eliana, 13318-000 Cabreuva - SP (BR); De Oliveira, Marcelo, 13216-680 Jundiai - SP (BR)
(74) Representative: Arpe Fernandez, Manuel de
(86) International application number: PCT/BR2013/000322
(87) International publication number: WO 2014/036619

(57) **Abstract**

The present invention refers to a technical arrangement introduced in an air system for wing mirrors and car glasses; the object thereof refers to a novel and versatile cleaning and defogging system for wing mirrors and car glasses, and for other similar items which, thanks to a jet of natural or compressed air, demists and eliminates water droplets from wing mirrors and glasses of the motor vehicle; the device comprises an electrical motor, pipes and a (flexible) metal or plastic nozzle. The motor may be housed inside the wing mirror assembly or inside the vehicle. The pipes (that are made of a flexible metal or plastic material) will be connected to the motor and arranged around the mirrors or, in the case of the glasses, they will be fixed to the frames where the glasses are fixed. The air flows through a nozzle (installed at the end of the pipe and close to the mirror and/or the glass). When the air jet is triggered, the water droplets are dispersed, thereby improving the driver visibility.
It should be noted that this air system for wing mirrors and car glasses has two configurations, one of them for private cars, which is operated by means of an electrical motor, and another one for trucks, which uses the compressed air already available, although excellent results are guaranteed in both cases.

Consequently, a very practical product has been developed, that will solve all the problems related to the demisting and elimination of water accumulated in the wing mirrors and car glasses of practically any motor vehicle, and which is also very easy to install, as it is a very simple device.

## Description

### INTRODUCTION

The present invention refers to a technical arrangement introduced in an air system for wing mirrors and car glasses; the object thereof refers to a novel and versatile cleaning and defogging system for wing mirrors and car glasses, and for other similar items which, thanks to a jet of natural or compressed air, demists and eliminates water droplets from wing mirrors and glasses of motor vehicles; the device comprises an electrical motor, pipes and a flexible metal or plastic nozzle. The motor may be housed inside the wing mirror assembly or inside the vehicle. The pipes (that are made of a flexible metal or plastic material) will be connected to the motor and arranged around the mirrors or, in the case of the glasses, they will be secured to the frames where the glasses are fixed. The air flows through a nozzle (installed at the end of the pipe and close to the mirror and/or the glass). When the air jet is triggered, the water droplets are dispersed, thereby improving the driver visibility.

It should be noted that this air system for wing mirrors and car glasses has two configurations, one of them for private cars, which is operated by means of an electrical motor, and another one for trucks, which uses the compressed air already available, although excellent results are guaranteed in both cases.

Consequently, a very practical product has been developed, that will solve all the problems related to the demisting and elimination of water accumulated in the wing mirrors and car glasses of practically any motor vehicle, and which is also very easy to install, as it is a very simple device.

### SCOPE OF APPLICATION

As its own name indicates, the scope of this technical arrangement introduced in an air system for wing mirrors and car glasses refers to the demisting and the elimination of water droplets accumulated in the wing mirrors and car glasses of motor vehicles in general.

### OBJECT

One of the main objects of this technical arrangement introduced in an air system for wing mirrors and car glasses is to completely disperse all the vapour and droplets accumulated in the wing mirrors and car glasses, through the action of a compressed or natural air jet. It is ideal and very convenient in rainy days or in foul weather, since it notably increases visibility, thus avoiding fatal accidents.

### STATE OF THE ART

The misting of car glasses, rear mirrors and wing mirrors of motor vehicles is a very frequent inconvenient, especially in rainy, cloudy or snowy days, etc., since on those occasions, car windows are usually closed and, as there is not an efficient air circulation system, as it is the case in most private cars, such situation is especially worsened.

As far as the inner part of the vehicle is concerned, some modern models incorporate demisting devices, especially for car glasses, which are the items that most suffer those conditions.

In the current state of the art, there is not an appropriate device for demisting and water droplet elimination that can be used with wing mirrors and ensures, in a simple and practical manner, the demisting and elimination of water accumulation, especially under adverse weather conditions.

Consequently, the invention is intended to provide a device for the demisting and elimination of accumulated water, comprising the above-mentioned advantages, that can also be quickly and easily installed in the wing mirror, and that is mainly characterised for its efficiency.

### TECHNOLOGICAL ADVANCES

The air system for wing mirrors and car glasses and its technical arrangement introduced, when compared to the products currently existing at the market, presents the following advantages:
- Demisting and elimination of water droplets of wing mirrors and car glasses of motor vehicles.
- Easy and fast installation in wing mirrors and car glasses.

### DESCRIPTION OF THE DRAWINGS

A series of drawings has been attached to provide a full and comprehensive view of the technical arrangement introduced in an air system for wing mirrors and car glasses that is the object of this Patent of a Utility Model; these are:

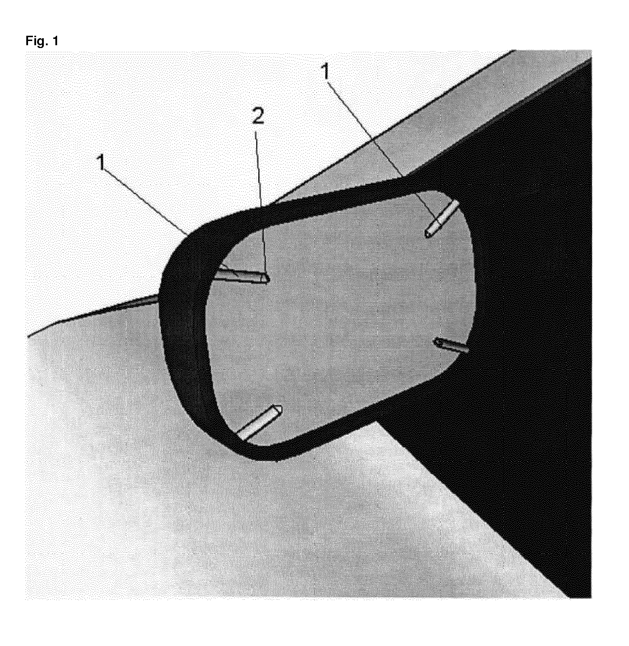

Figure 1: Shows a perspective view of the air system for wing mirrors and car glasses.

### DESCRIPTION OF THE INVENTION

As it stems from that attached drawings, that are an integral part of this description, the arrangement applied to the air system for wing mirrors and car glasses refers to a novel and versatile cleaning and defogging system for wing mirrors and car glasses, and for other similar items which, thanks to a jet of natural or compressed air, demists and eliminates water droplets from wing mirrors and glasses of the motor vehicle; the device comprises an electrical motor, pipes 1 and a flexible metal or plastic nozzle 2. The motor may be housed inside the wing mirror assembly or inside the vehicle. The pipes (that are made of a flexible metal or plastic material) will be connected to the motor and arranged around the mirrors. The air flows through a nozzle (installed at the end of the pipe and close to the mirror). When the air jet is triggered, the water droplets are dispersed, thereby improving the driver visibility.

As far as the remaining glass surfaces of the motor vehicle, the device would be installed at the side/vertical frames (so that they would be demisted, and the water droplets eliminated, by means of a jet of natural or compressed air). The same motor used for the wing mirrors is also used for the car glasses. The air flows through a nozzle (which is installed at the end of the pipe, in the side/vertical frames. When the air jet is triggered, the water droplets are dispersed, thereby improving the driver visibility.

From a technical point of view, this Air System for wing mirrors and car glasses incorporates its own development characteristics, among which its functionality, practicality, low cost and safety offered to drivers should be highlighted.

### CONCLUSION

On the basis of the above-mentioned description and figure, it can be verified that the invention refers to a technical arrangement introduced in an air system for wing mirrors and car glasses, which could be perfectly included within those which comply with the requisites established for Patents of Utility Models and covers a significant gap in the market, especially considering that the invention incorporates technical arrangements and characteristics previously unseen, and deserves the privilege requested herein.

## Claims

1. Technical arrangement introduced in an air system for wing mirrors and car glasses, comprising a novel and versatile cleaning and defogging system for wing mirrors and car glasses, and for other similar items which, thanks to a jet of natural or compressed air, demists and eliminates water droplets from wing mirrors and glasses of the motor vehicle, and comprising an electrical motor, pipes and a (flexible) metal or plastic nozzle.

2. Technical arrangement introduced in an air system for wing mirrors and car glasses, according to claim 1, wherein the motor may be housed inside the wing mirror assembly or inside the vehicle. The pipes (that are made of a flexible metal or plastic material) will be connected to the motor and arranged around the mirrors and glasses. The air will be released through a nozzle (installed at the end of the pipe and close to the mirror and/or the glass). When the air jet is triggered, the water droplets are dispersed, thereby improving the driver visibility.

3. Technical arrangement introduced in an air system for wing mirrors and car glasses, according to claims 1 and 2, **characterized in that** the Air System for Wing Mirrors and Glass surfaces comprises two configurations, one for private cars which is operated by means of an electric motor, and another one for trucks, which uses the compressed air already available at the truck, although excellent results are guaranteed in both cases.
